# EUROPEAN PATENT SPECIFICATION

(11) **EP 2 555 542 B1**
(45) Date of publication and mention of the grant of the patent: **05.03.2014**
(21) Application number: 11306006.5
(22) Date of filing: 02.08.2011
(51) Int. Cl.: H04Q 11/00

(54) **Device for connecting optical network elements in an optical access network**
Vorrichtung zur Verbindung optischer Netzwerkelemente in einem optischen Zugriffsnetzwerk
Dispositif pour la connexion d'éléments de réseau optique dans un réseaux d'accès optique

(43) Date of publication of application: 06.02.2013
(73) Proprietor: Alcatel Lucent, 75007 Paris (FR)
(72) Inventor: Pöhlmann, Wolfgang, 71282 Hemmingen (DE); Pfeiffer, Thomas, 70569 Stuttgart (DE)
(74) Representative: Mildner, Volker

(56) References cited:
- US-A1- 2002 071 149
- US-A1- 2009 263 122
- US-A1- 2010 098 407

## Description

### Field of the invention

The invention relates to a device and a method for connecting optical network elements in an optical access network

### Background

It is known to provide to one or more subscribers a network connection to a telecommunications core network by means of an optical telecommunications access network. Such access networks are also known as passive optical networks (PON). The subscribers are preferably called customers or users. An example of such an access network is disclosed in US 2009/263 122 A1 (HELKEY ROGER JONATHAN et al), 22 October 2009.

An interconnection between the access network and the core network or metro network is given at a so called central office. This interconnection is provided by a network sided access network termination unit, which is preferably called an optical line terminal (OLT). Within the access network, the OLT is connected via an optical fibre, preferably called optical feeder fibre, to a remote node located outside of the central office. Over the optical feeder fibre, the network sided access network termination unit transmits data in the downstream direction via an optical time division multiplex (TDM) signal to the remote node.

At the remote node, the TDM signal transmitted in downstream direction is distributed onto a plurality of optical fibres of an optical distribution network, which is a part of the optical access network. This distribution may be performed in the optical domain by a device acting as an optical splitter device that splits the optical downstream TDM signal onto the optical fibres of the optical distribution network. To these optical fibres of the optical distribution network, either subscriber sided access network termination units, preferably called optical network units (ONU), are connected directly, or further branches of the optical distribution network are connected to these optical fibres of the optical distribution network. Each subscriber is connected to the access network at a subscriber connection point via a subscriber sided access network termination unit. To such a subscriber sided access network termination unit, the subscriber may connect customer premises equipment such as telephones, servers, multimedia devices or other communication devices.

The subscriber sided access network termination units receive data from devices of the subscribers and transmit this data within timeslots of respective optical upstream TDM signals in the upstream direction towards the remote node. The optical upstream TDM signals are alternatively called optical upstream TDMA signals, wherein TDMA stands for time division multiple access. At the remote node, the upstream TDM signals received from the subscriber sided access network termination units are combined to a combined optical TDM signal which is then transmitted via the optical feeder fibre towards the network sided access network termination unit. Such a combination may be performed in the optical domain by a device acting as an optical combiner.

An allocation of timeslots to the respective subscriber sided access network termination units for the downstream direction and the upstream direction is negotiated in advance between the subscriber sided access network termination units and the network sided access network termination unit during a so called ranging process.

### Summary

It is an objective, to improve the known devices for connecting optical network elements in an optical access network.

Proposed is an optical device for connecting optical network elements in an optical access network.

The device comprises a plurality of first optical interfaces adapted to receive respective optical TDM downstream signals via respective first optical point-to-point connections.

The device comprises also a plurality of second optical interfaces adapted to receive respective optical TDM upstream signals via respective second optical point-to-point connections.

The device comprises furthermore a switching unit, that is configurable to distribute the optical TDM downstream signals onto the second respective optical point-to-point connections
- such that a single of the second respective optical point-to-point connections is provided with only one of the optical TDM downstream signals,
- and such that at least one of the optical TDM downstream signals is distributed onto a plurality of the second respective optical point-to-point connections.

The switching unit is furthermore configurable to map the optical TDM upstream signals onto the first optical point-to-point connections such that an optical TDM upstream signal is mapped onto the corresponding one of the first optical point-to-point connections from which it is provided with an optical TDM downstream signal.

Furthermore, the switching unit is reconfigurable.

In order to grasp the advantages of the proposed device, the following aspects have to be taken into consideration.

Different optical TDM downstream signals may be received via the respective first optical point-to-point connections from different OLTs. Furthermore, different optical TDM upstream signals may be received at the respective second optical point-to-point connections from different ONUs. By distributing the optical TDM downstream signals onto the second respective optical point-to-point connections such that
- a single of the second respective optical point-to-point connections is provided with only one of the optical TDM downstream signals
- and such that at least one of the optical TDM downstream signals is distributed onto a plurality of the second respective optical point-to-point connections,
one or more logical point-to-multipoint connections can be established, such that at least one single of these logical point-to-multipoint connections connects one single OLT with a plurality of ONUs in the downstream direction. These logical point-to-multipoint connections are also established in the upstream direction, by mapping the optical TDM upstream signals onto the first optical point-to-point connections such that an optical TDM upstream signal is mapped onto the corresponding one of the first optical point-to-point connections from which it is provided with an optical TDM downstream signal.

In other words, the proposed device allows to connect a first OLT to a plurality of ONUs via a logical point-to-multipoint connection and, if desired, also a second OLT to another plurality of ONUs, or instead a single ONU, via a second logical point-to-multipoint connection. This corresponds to an assignment of multiple ONUs to one unique OLT. Since the switching unit is reconfigurable, it is possible change this assignment and to reassign a single ONU to another OLT. If desired, also multiple ONUs may be assigned to another OLT.

### Brief description of the Figures

Figure 1 shows a remote node according to the prior art.
Figure 2 shows an optical access network together with an embodiment of the proposed device.
Figure 3 shows an embodiment of a switching unit in detail.

### Description of Embodiments

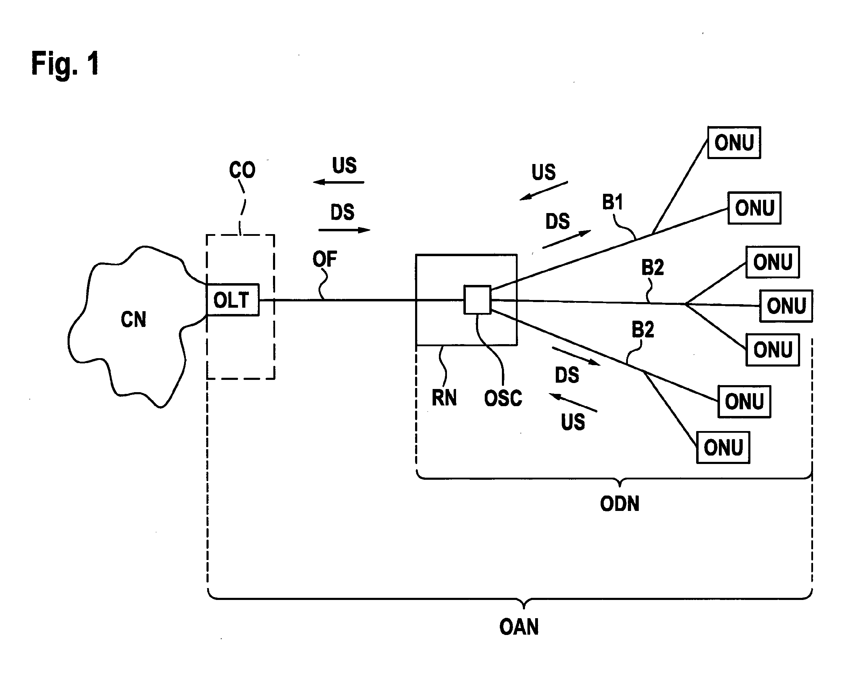

Figure 1 shows an optical access network OAN as known from the prior art. At an interconnection of the optical access network OAN to a core network CAN, a network sided access network termination unit in the form of an optical line terminal OLT is placed. The OLT is preferably placed in a location called central office CO. The core network CN is alternatively a metro network. By the term central office is meant a location at which an interface or interconnection between the core network CN and the optical access network OAN is provided by means of hardware devices.

An OLT is a device that serves as the service provider's endpoint of the optical access network OAN. An OLT performs a conversion of electrical or optical signals received from or sent to the core network CN into optical signals received from or sent to subscriber sided access network termination units of the optical access network OAN. Preferably, the subscriber sided access network termination units are optical network units ONU or alternatively optical network terminals.

The OLT is connected via an optical fibre OF to a remote node RN. The remote node contains a passive optical element OSC. The passive optical element OSC acts as an optical splitter for distributing an optical TDM signal sent in a downstream direction DS towards optical branches B1, B2, B3 of an optical distribution network ODN. Furthermore, the passive optical element OSC acts as an optical combiner for combining optical TDM signals received in an upstream direction US from the optical branches B1, B2, B3. The optical distribution network ODN is a subsegment of the optical access network OAN.

Subscriber sided access network termination units ONU are connected to the ends of the optical branches B1, B2, B3. The optical branches B1, B2, B3 may contain further optical splitting and/or optical combining elements not explicitly shown in Figure 1.

The remote node RN as described above allows only to establish a fixed logical point-to-multipoint connection of a single OLT to a number of ONUs.

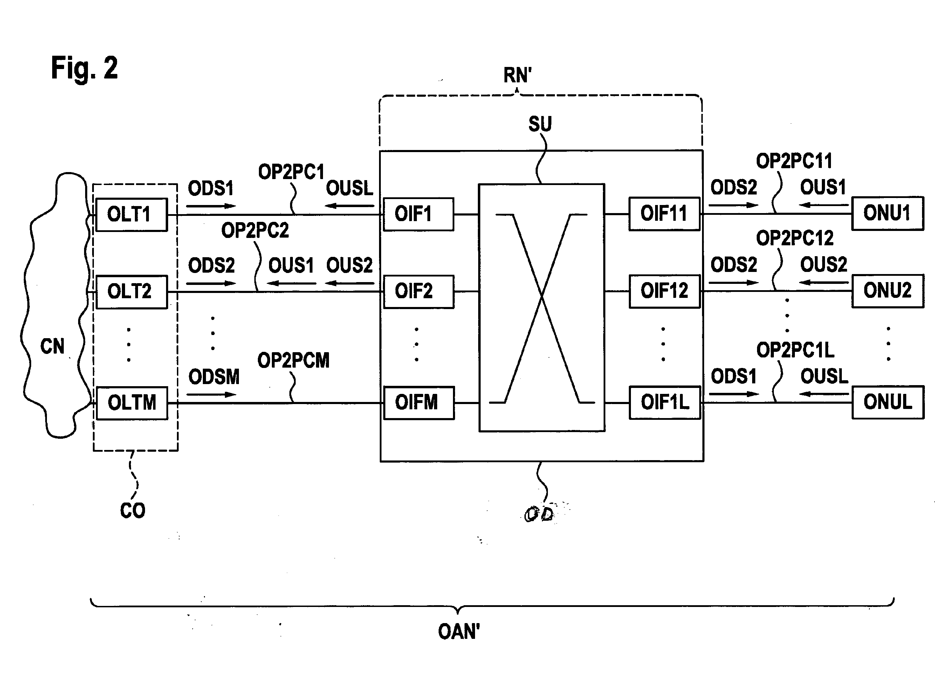

Figure 2 shows an optical access network OAN' together with a proposed optical device OD. The optical device OD is placed at a remote node RN' outside the central office CO. The proposed optical device OD itself may alternatively be called a remote node RN'.

The optical device OD contains a number of central office sided optical interfaces OIF1, OIF2, ..., OIFM, at which respective optical TDM downstream signals ODS1, ODS2, ... , ODSM are received via respective central office sided optical point-to-point connections OP2PC1, OP2PC2, ..., OP2PCM. The respective central office sided optical point-to-point connections OP2PC1, OP2PC2, ..., OP2PCM connect respective OLTs OLT1, OLT2, ...,OLTM with the optical device OD.

A switching unit SU is connected to the central office sided optical interfaces OIF1, ..., OIFM as well as subscriber sided optical interfaces OIF11, OIF 12, ..., OIF1L. The subscriber sided optical interfaces OIF11, OIF 12, ..., OIF1L are adapted to receive respective optical TDM upstream signals OUS1, OUS2, ..., OUSL via respective subscriber sided optical point-to-point connections OP2PC11, OP2PC12, ..., OP2PC1 L. The respective optical point-to-point connections OP2PC11, OP2PC12, ..., OP2PC1 L connect respective single ONUs ONU1, ONU2, ..., ONUL with the optical device OD.

In the example shown in Figure 2, the switching unit SU distributes the optical TDM downstream signals ODS1, ODS2, ... , ODSM onto the subscriber sided optical point-to-point connections OP2PC11, OP2PC12, ..., OP2PC1 L. The downstream signal ODS1 is distributed onto the point-to-point connection OP2PC1L, while the downstream signal ODSM is distributed onto a point-to-point connection not explicitly shown in Figure 2. The downstream signal ODS2 is distributed onto the point-to-point connection OP2PC11 and the point-to-point connection OP2PC12.

To summarize the above, the switching unit SU is configured such that it distributes the optical TDM downstream signals ODS1, ODS2, ... , ODSM onto the subscriber sided optical point-to-point connections OP2PC11, OP2PC12, ..., OP2PC1L, such that a single of the subscriber sided optical point-to-point connections OP2PC11, OP2PC12, ..., OP2PC1L is provided with only one of the optical TDM downstream signals ODS1, ODS2, ... , ODSM. Furthermore, the switching unit SU distributes the optical TDM downstream signals ODS1, ODS2, ... , ODSM onto the subscriber sided optical point-to-point connections OP2PC11, OP2PC12, ..., OP2PC1L, such that at least one of the optical TDM downstream signals ODS2 is distributed onto two or more of the subscriber sided optical point-to-point connections OP2PC11, OP2PC12.

The subscriber sided point-to-point connections OP2PC11, OP2PC12, ..., OP2PC1L L are point-to-point connections in the sense that a subscriber sided network termination unit ONU1, ONU2, ..., ONUL is connected to the device OD via a separate, respective subscriber sided point-to-point connection OP2PC11, OP2PC12, ..., OP2PC1L. Furthermore, the subscriber sided point-to-point connections OP2PC11, OP2PC12, ..., OP2PC1L are point-to-point connections in the sense that a subscriber sided network termination unit ONU1, ONU2, ..., ONUL is connected to the device OD without a regeneration of optical signals taking place at the subscriber sided point-to-point connections OP2PC11, OP2PC12, ..., OP2PC1L.

Since the switching unit SU distributes the optical TDM downstream signal ODS1 received from the point-to-point connection OP2PC1 onto the point-to-point connection OP2PC1 L, it also maps the optical upstream signal OUSL received via the point-to-point connection OP2PC1L onto the point-to-point connection OP2PC1.

Since the switching unit SU distributes the optical TDM downstream signal ODS2 received from the point-to-point connection OP2PC2 onto the point-to-point connections OP2PC11 and OP2PC12, it also maps the optical upstream signals OUS1 and OUS2 received via the point-to-point connections OP2PC11 and OP2PC12 onto the point-to-point connection OP2PC2.

To summarize the above, the switching unit SU is configurable to map optical TDM upstream signals OUS1, OUS2 onto the network sided optical point-to-point connections OP2PC11, OP2PC12, such that an optical TDM upstream signal OUS1, OUS2 is mapped onto the corresponding one of the network sided optical point-to-point connections OP2PC11, OP2PC12, from which it is provided with an optical TDM downstream signal ODS2.

By configuring the switching unit SU to a state as described above, at least one logical point-to-multipoint connection between an OLT OLT2 and a plurality of ONUs ONU1, ONU2 is established. Further logical point-to-multipoint connections may also be established. The switching unit SU of the device OD is reconfigurable to another state, in which also at least one logical point-to-multipoint connection is established between one OLT and a plurality of ONUs.

As previously stated, the proposed device OD allows to connect a first OLT to a plurality of ONUs via a logical point-to-multipoint connection and preferably, if desired, also a second OLT to another plurality of ONUs via a second logical point-to-multipoint connection. This corresponds to an assignment of multiple ONUs to one respective unique OLT. Since the switching unit SU is reconfigurable, it is possible change this assignment and to reassign a single ONU to another OLT, or to reassign multiple ONUs to another OLTs. This may be desirable in the case, that different OLTs are owned by different providers and that an ONU of a customer, that desires to switch providers, should be re-connected to a different OLT of a different provider.

Furthermore, a reconfiguration makes it possible to change an assignment of multiple ONUs from one OLT to one or more other OLTs. This may be desirable in the case that a first OLT is subject to a failure and that the ONUs assigned to the failing OLT should be re-assigned to one or more other faultless OLTs. This may alternatively also be desirable in the case that the point-to-point connection connecting one OLT is subject to a failure, such as a cable cut of the optical fibre, and that therefore the ONUs assigned to the OLT that is subject to the cut should be re-assigned to one or more other OLTs whose point-to-point connections are still working properly.

Since an ONUs is uniquely assigned to a single OLT, the exchange of data signals provided by an OLT to on ONU or a group of ONUs is separated at the level of the physical layer, in name the optical layer. Thus, different providers may provide different OLTs, while each provider monitors the exchange of data between his specific OLT and the ONUs of customers that are subscribed to his logical part of the access network. Therefore, actions an observation of proper data exchange may be observed by a provider at this very own OLT.

Furthermore, the flexibility of reconfiguring the switching unit for re-assigning one or more ONUs from one of the first point-to-point connections, leading to one OLT, to another of the first point-to-point connections, leading to another OLT, is an advantage in the case that the number of customers at a first point of time does not yet exceed the number of ONUs that may be handled by a single OLT. Assuming that a single OLT is able to handle a number of N ONUs but that at the first point of time the number of subscribed customers, each being provided with its own ONU, is smaller than N, then it would be sufficient to install in a central office only a single OLT at first. At a later point of time the number of customers wishing to subscribe at the provider may increase to a number greater than N, such that this can not be handled any more by just one single OLT. Therefore, at this later point of time a provider may provide a second OLT and connect new ONUs to this second OTL in order to serve also the new customers, for which a reconfiguration of the device connecting the OLTs and the ONUs may be desirable. By providing the new OLT not from the very beginning of the operation of the optical access network but only from the mentioned later point of time, the provisioning of the optical access network is less costly for the provider than when providing all OLTs from the very beginning.

A remote node as described according to the prior art allows only to establish a fixed logical point-to-multipoint connection of a single OLT to a number of ONUs. Therefore, such a remote node does not achieve the advantages of the proposed device as outlined above.

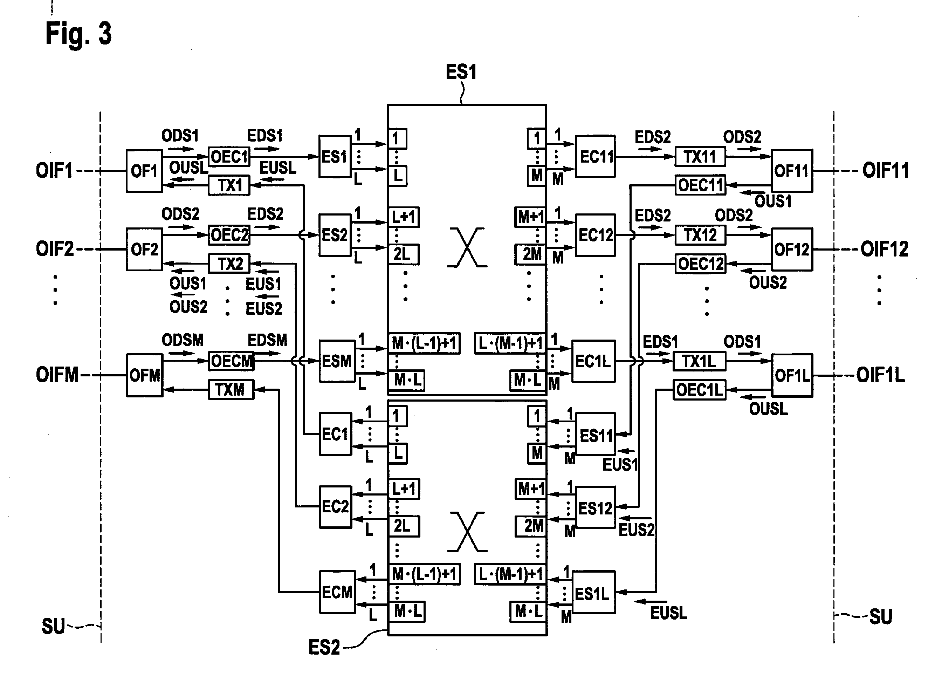

Figure 3 shows a preferred embodiment of the switching unit SU in detail.

An optical filter OF1 is connectable to the optical interface OIF1. The optical filter OF1 splits the optical signals ODS1 and OUSL, which have different wavelengths. The optical downstream signal ODS1 is converted by an optical-electrical converter OEC1 into an electrical downstream signal EDS1, which is provided to an electrical splitter ES1. The splitter ES1 distributes the signal EDS1 onto L different incoming ports of an electrical switching unit ES1.

Respective optical filters OF2, ..., OFM, optical-electrical converters OEC2, ..., OECM and electrical splitters ES2, ... , ESM distribute respective electrical downstream signals EDS2, ..., EDSM onto incoming ports of the electrical switching unit ES1. The electrical switching unit ES1 switches the electrical downstream signals EDS1, ..., EDSM onto outgoing ports of the electrical switching unit ES1, to which electrical combiners EC11, EC12, ..., EC1L are connected. The electrical combiners EC11, EC12, ..., EC1L forward the respective electrical downstream signals EDS1, EDS2 to transmitters TX1 1, TX12, ..., TX1 L, which are preferably lasers. The transmitters TX1 1, TX12, ..., TX1L convert the electrical downstream signals EDS1, EDS2 back into the respective optical downstream signals ODS1, ODS2, which then are provided to optical filters OF11, OF12, ..., OF1L, which in turn are connectable to the optical interfaces OIF11, OIF12, ..., OIF1L.

The optical filter OF11 splits the optical signals ODS2 and OUS1, which have different wavelengths. The optical upstream signal OUS1 is converted by an optical-electrical converter OEC11 into an electrical downstream signal EUS1, which is provided to an electrical splitter ES11. The splitter ES11 distributes the signal EUS1 onto M different incoming ports of an electrical switching unit ES2.

Respective optical filters OF12, ..., OFL, optical-electrical converters OEC12, ... , OEC1L and electrical splitters ES12, ... , ES1L distribute respective electrical upstream signals EUS2, ..., EUSL onto incoming ports of the electrical switching unit ES2. The electrical switching unit ES2 switches the electrical upstream signals EUS1, ..., EUSL onto outgoing ports of the electrical switching unit ES2, to which electrical combiners EC1, EC2, ..., ECM are connected. The electrical combiners EC1, EC2, ..., ECM forward the respective electrical upstream signals EUS1, EUS2, EUSL to transmitters TX1, TX2, ..., TXM, which are preferably lasers. The transmitters TX1, TX2, ..., TX1M convert the electrical upstream signals EUS1, EUS2, EUSL back into the respective optical upstream signals OUS1, OUS2, OUSL, which then are provided to the optical filters OF1, OF2, ..., OFM, which in turn are connectable to the optical interfaces OIF1, OIF2, ..., OIF1M.

The optical-electrical converters OEC1, ... , OECM, OEC11, ... , OEC1L perform a 2R-signal regeneration when converting optical signal to electrical signals. This 2R-signal regeneration includes amplitude regeneration and shape regeneration.

To summarize the above, the switching unit SU distributes the optical TDM downstream signals, by converting the optical TDM downstream signals into respective electrical TDM downstream signals and switching the electrical TDM downstream signals. The switched electrical TDM downstream signals are then converted back into optical TDM downstream signals. Furthermore, the switching unit SU maps the optical TDM upstream signals by converting the optical TDM upstream signals into respective electrical TDM upstream signals and to switch the electrical TDM upstream signals. The switched electrical TDM upstream signals are then converted back into optical TDM upstream signals.

The configuration of the electrical switches is performed by a controlling unit not explicitly shown in the Figure 3. This controlling unit may receive configuration instructions via an optical interface that is connectable via one of the optical interfaces to the access network.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figure 2, 3 and 4, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "switch" should not be construed to refer exclusively to hardware capable of executing software, and may implicitly include, without limitation a application specific integrated circuit (ASIC) or a field programmable gate array (FPGA). Other hardware, conventional and/or custom, may also be included. Similarly, any switches shown in the Figure 2, 3 and 4, are conceptual only. Their function may be carried out through the operation of program logic, through dedicated logic, through the interaction of program control and dedicated logic, or even manually, the particular technique being selectable by the implementer as more specifically understood from the context. It should be appreciated by those skilled in the art that any block diagrams herein represent conceptual views of illustrative circuitry embodying the principles of the invention.

## Claims

1. Optical access network (OAN'),
comprising
- a plurality of network sided access network termination units (OLT1, ...,OLTM),
- a plurality of subscriber sided access network termination units (ONU1, ..., ONUL),
- an optical device (OD),
wherein said network sided access network termination units (OLT1, ...,OLTM), are connected to respective of first optical interfaces of said optical device (OD) via respective first optical point-to-point connections (OP2PC1, ..., OP2PCM), wherein
said subscriber sided access network termination units (ONU1, ..., ONUL) are connected to respective of second optical interfaces of said optical device (OD) via respective second optical point-to-point connections (OP2PC11, ..., OP2PC1L) wherein said optical device (OD) comprises
- said plurality of first optical interfaces (OIF1, ..., OIFM) adapted to receive respective optical time division multiplex, TDM, downstream signals (ODS1, ..., ODSM) via said respective first optical point-to-point connections (OP2PC1, ..., OP2PCM),
- said plurality of second optical interfaces (OIF11, ..., OIF1L) adapted to receive respective optical TDM upstream signals (OUS1, ..., OUSL) via said respective second optical point-to-point connections (OP2PC11, ..., OP2PC1L),
- a switching unit (SU), configurable
○ to distribute said optical TDM downstream signals (ODS1, ..., ODSM) onto said second respective optical point-to-point connections (OP2PC11, ..., OP2PC1L) such that a single of said second respective optical point-to-point connections (OP2PC11, ..., OP2PC1 L) is provided with only one of said optical TDM downstream signals (ODS1, ..., ODSM) and such that at least one of said optical TDM downstream signals (ODS1, ..., ODSM) is distributed onto a plurality of said second respective optical point-to-point connections (OP2PC11, ..., OP2PC1 L),
○ and to map said optical TDM upstream signals (OUS1, ..., OUSL) onto said first optical point-to-point connections (OP2PC1, ..., OP2PCM) such that an optical TDM upstream signal (OUS1, ..., OUSL) is mapped onto the corresponding one of said first optical point-to-point connections (OP2PC1, ..., OP2PCM) from which it is provided with an optical TDM downstream signal,
wherein said switching unit (SU) is reconfigurable.

## Patentansprüche

1. Optisches Zugangsnetzwerk (OAN'),
umfassend:
- Eine Vielzahl von netzwerkseitigen Zugangsnetzwerk-Abschlusseinheiten (OLT1, ..., OLTM),
- eine Vielzahl von teilnehmerseitigen Zugangsnetzwerk-Abschlusseinheiten (ONU1, ..., ONUL),
- eine optische Vorrichtung (OD),
wobei die besagten netzwerkseitigen Zugangsnetzwerk-Abschlusseinheiten (OLT1, ...,OLTM) über jeweilige erste optische Punkt-zu-Punkt-Verbindungen (OP2PC1, ..., OP2PCM) mit jeweiligen ersten optischen Schnittstellen der besagten optischen Vorrichtung (OD) verbunden sind,
wobei
die besagten teilnehmerseitigen Zugangsnetzwerk-Abschlusseinheiten (ONU1, ..., ONUL) über jeweilige zweite optische Punkt-zu-Punkt-Verbindungen (OP2PC11, ..., OP2PC1L) mit jeweiligen zweiten optischen Schnittstellen der besagten optischen Vorrichtung (OD) verbunden sind,
wobei die besagte optische Vorrichtung (OD) umfasst:
- die besagte Vielzahl von ersten optischen Schnittstellen (OIF1, ..., OIFM), welche für den Empfang von jeweiligen optischen Zeitmultiplex- bzw. TDM-Downstream-Signalen (ODS1, ..., ODSM) über die besagten jeweiligen ersten Punkt-zu-Punkt-Verbindungen (OP2PC1, ..., OP2PCM) ausgelegt sind,
- die besagte Vielzahl von zweiten optischen Schnittstellen (OIF11, ..., OIF1L), welche für den Empfang von jeweiligen optischen TDM-Upstream-Signalen (OUS1, ..., OUSL) über die besagten jeweiligen zweiten Punkt-zu-Punkt-Verbindungen (OP2PC11, ..., OP2PC1L) ausgelegt sind,
- eine Schalteinheit (SU), konfiguriert für
○ das Verteilen der besagten optischen TDM-Downstream-Signale (ODS1, ..., ODSM) auf die besagten jeweiligen zweiten optischen Punkt-zu-Punkt-Verbindungen (OP2PC11, ..., OP2PC1L), derart, dass eine einzelne der besagten jeweiligen zweiten optischen Punkt-zu-Punkt-Verbindungen (OP2PC11, ..., OP2PC1L) mit nur einem der besagten optischen TDM-Downstream-Signale (ODS1, ..., ODSM) versorgt wird, und derart, dass mindestens eines der besagten optischen TDM-Downstream-Signale (ODS1, ..., ODSM) auf eine Vielzahl der besagten jeweiligen zweiten optischen Punkt-zu-Punkt-Verbindungen (OP2PC11, ..., OP2PC1L) verteilt wird,
○ das Abbilden der besagten optischen TDM-Upstream-Signale (OUS1, ..., OUSL) auf die besagten ersten optischen Punkt-zu-Punkt-Verbindungen (OP2PC1, ..., OP2PCM), derart, dass ein optisches TDM-Upstream-Signal (OUS1, ..., OUSL) auf die entsprechende eine der besagten ersten optischen Punkt-zu-Punkt-Verbindungen (OP2PC1, ..., OP2PCM), von welcher sie mit einem optischen TDM-Downstream-Signal versorgt wird, abgebildet wird,
wobei die besagte Schalteinheit (SU) rekonfigurierbar ist.

## Revendications

1. Réseau d'accès optique (OAN') comprenant
- une pluralité d'unités de terminaison de réseau d'accès côté réseau (OLT1, ..., OLTM),
- une pluralité d'unités de terminaison de réseau d'accès côté abonné (ONU1, ..., ONUL),
- un dispositif optique (OD),
lesdites unités de terminaison de réseau d'accès côté réseau (OLT1, ..., OLTM) étant connectées aux interfaces correspondantes parmi les premières interfaces optiques dudit dispositif optique (OD) par le biais de premières connexions point à point optiques (OP2PC1, ..., OP2PCM) correspondantes,
lesdites unités de terminaison de réseau d'accès côté abonné (ONU1, ..., ONUL) étant connectées aux interfaces correspondantes parmi les deuxièmes interfaces optiques dudit dispositif optique (OD) par le biais de deuxièmes connexions point à point optiques (OP2PC11, ..., OP2PC1 L) correspondantes,
ledit dispositif optique (OD) comprenant
- ladite pluralité de premières interfaces optiques (OIF1, ..., OIFM) adaptées pour recevoir des signaux optiques de liaison descendante multiplexés par répartition dans le temps, TDM, correspondants (ODS1, ..., ODSM) par le biais desdites premières connexions point à point optiques (OP2PC1, ..., OP2PCM) correspondantes,
- ladite pluralité de deuxièmes interfaces optiques (OIF11, ..., OIF1L) adaptées pour recevoir des signaux optiques de liaison montante TDM correspondants (OUS1, ..., OUSL) par le biais desdites deuxièmes connexions point à point optiques (OP2PC11, ..., OP2PC1L) correspondantes,
- une unité de commutation (SU) configurable
○ pour distribuer lesdits signaux optiques de liaison descendante TDM (ODS1, ..., ODSM) sur lesdites deuxièmes connexions point à point optiques (OP2PC11, ..., OP2PC1L) correspondantes de telle sorte qu'un seul desdits signaux optiques de liaison descendante TDM (ODS1, ..., ODSM) ne soit délivré à une connexion individuelle parmi lesdites deuxièmes connexions point à point optiques (OP2PC11, ..., OP2PC1L) et de telle sorte qu'au moins un desdits signaux optiques de liaison descendante TDM (ODS1, ..., ODSM) soit distribué sur une pluralité desdites deuxièmes connexions point à point optiques (OP2PC11, ..., OP2PC1L) correspondantes,
○ et pour mettre en correspondance lesdits signaux optiques de liaison montante TDM (OUS1, ..., OUSL) avec lesdites premières connexions point à point optiques (OP2PC1, ..., OP2PCM) de telle sorte qu'un signal optique de liaison montante TDM (OUS1, ..., OUSL) soit mis en correspondance avec la connexion correspondante parmi lesdites premières connexions point à point optiques (OP2PC1, ..., OP2PCM) depuis laquelle est délivré un signal optique de liaison descendante
ladite unité de commutation (SU) étant reconfigurable.
